# EUROPEAN PATENT APPLICATION

(11) **EP 4 346 335 A1**
(43) Date of publication of application: **03.04.2024**
(21) Application number: 23200642.9
(22) Date of filing: 28.09.2023
(51) Int. Cl.: H05B 7/144

(54) **POWER SUPPLY FOR AN ELECTRIC ARC FURNACE**

(30) Priority: 29.09.2022 US 202263377640 P
(71) Applicant: AMI International SAPI de C.V., Monterrey, Nuevo Leon 64650 (MX)
(72) Inventor: Barajas, Juan Bernardo Sainz, Monterrey (MX); Villarreal, Rommel Daed Villarreal, Monterrey (MX)
(74) Representative: Harrison, Philip Mark

(57) **Abstract**

A power supply is provided for an electric arc furnace in which heat is generated by passage of current through one or more electrodes that causes an electric arc between the one or more electrodes and a metal in the electric arc furnace. The power supply is coupleable to and between the electric arc furnace and a utility configured to provide three-phase alternating current (AC) power. The power supply includes power circuitry with a cycloconverter (CCV) for each electrode of the one or more electrodes. The CCV is configured to receive three-phase power voltage and produce a single-phase voltage with reduced frequency that is delivered to the electrode to cause the electrode to create the electric arc that produces the heat to melt the metal. Control circuitry is operably coupled to the CCV, and configured to control a frequency of the single-phase voltage.

## Description

### CROSS-REFERENCE TO RELATED APPLICATION(S)

The present application claims priority to U.S. Provisional Patent Application No. 63/377,640, entitled: Power Supply for an Electric Arc Furnace, filed on September 29, 2022, the content of which is hereby incorporated by reference.

### TECHNOLOGICAL FIELD

The present disclosure relates generally to electric arc furnaces (EAFs) and, in particular, to a power supply for an EAF that includes a cycloconverter for alternating current (AC) conversion.

### BACKGROUND

In the steel industry, electric arc furnaces (EAFs) are used to melt metals and other ingredients to form steel. The heat needed to melt the metals is generated by passing current through one or more carbon bodies, commonly referred to as graphite electrodes, and forming an arc between the electrode(s) and the metals in the furnace. Conventionally operated EAFs include power-supply equipment, which often includes a step-down transformer, circuit breakers, a furnace transformer, a delta closure, and a tap changer for electrode voltage control. Although conventional power-supply equipment is adequate, it is generally desirable to improve on existing designs.

### BRIEF SUMMARY

Example implementations of the present disclosure are directed to electric arc furnaces (EAFs) and, in particular, to a power supply for an EgAF that includes a cycloconverter for alternating current (AC) conversion. The present disclosure includes, without limitation, the following example implementations.

Some example implementations provide an electric arc furnace system comprising: an electric arc furnace including one or more electrodes, the electric arc furnace configured to produce heat by passage of current through the one or more electrodes that causes an electric arc between the one or more electrodes and a metal in the electric arc furnace; and a power supply coupled to the electric arc furnace, and coupleable to a utility configured to provide three-phase alternating current (AC) power, the power supply including power circuitry with a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal. In various examples, the CCV is operable in circulating current or non-circulating current configurations.

Some example implementations provide a power supply for an electric arc furnace in which heat is generated by passage of current through one or more electrodes that causes an electric arc between the one or more electrodes and a metal in the electric arc furnace, the power supply coupleable to and between the electric arc furnace and a utility configured to provide three-phase alternating current (AC) power, the power supply comprising: power circuitry including a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal; and control circuitry operably coupled to the CCV for each electrode, and configured to control a frequency of the single-phase voltage delivered by the CCV to the electrode.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates an electric arc furnace system according to some example implementations of the present disclosure; and
FIGS. 2 and 3 further illustrate power circuitry of the electric arc furnace system of FIG. 1, according to various example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably.

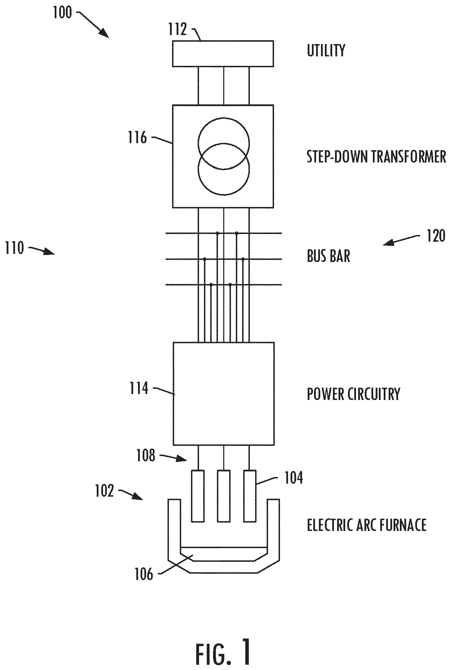

Example implementations of the present disclosure relate generally to electric arc furnaces (EAFs) and, in particular, to a power supply for an EAF that includes a cycloconverter for alternating current (AC) conversion. In this regard, FIG. 1 illustrates an electric arc furnace system **100** according to some example implementations of the present disclosure. As shown, the electric arc furnace system includes an electric arc furnace **102** with one or more electrodes **104** (three electrodes shown). The electric arc furnace is configured to produce heat by passage of current through the one or more electrodes that causes an electric arc between the one or more electrodes and a metal **106** in the electric arc furnace. As described, the electric arc furnace system is configured as a six-pulse system. It should be understood, however, that the electric arc furnace system may be equally configured as a twelve-pulse system, eighteen-pulse system, twenty-four pulse system, or the like. It should also be understood that in various implementations, the electric arc furnace system may include one or more additional or alternative components relative to those shown.

In various examples, the electric arc furnace **102** is powered by three-phase power lines **108** carrying about thirty-five thousand amps or more of current. In the steel industry in particular, the electrodes **104** may be formed of graphite electrode columns to metals, melt metals and other ingredients to form steel. The heat needed to melt metals is generated by passing current through one or more of the electrode columns and forming an arc between the electrode column(s) and the metal in the furnace. Electrical currents in excess of 100,000 amperes are often used. The resulting high temperature melts the metals and other ingredients.

To supply the requisite power to the electric arc furnace **102,** the electric arc furnace system **100** includes a power supply **110** coupled to the electric arc furnace, and coupleable to a utility **112** configured to provide three-phase alternating current (AC) power. As shown, the power supply includes power circuitry **114** to maintain current and power input to the one or more electrodes **104.** In this regard, the power circuitry includes a cycloconverter (CCV) for each electrode of the one or more electrodes. The CCV is configured to receive three-phase power voltage and produce a single-phase voltage with reduced frequency that is delivered to the electrode to cause the electrode to create the electric arc that produces the heat to melt the metal. In various examples, the CCV may be operable in a circulating current configuration, or a non-circulating current configuration.

As also shown in FIG. 1, in various some examples, the power supply **110** further includes a step-down transformer **116** coupleable to the utility **112,** and coupled to the power circuitry **114.** The step-down transformer is configured to step down three-phase voltage of the three-phase AC power suitable to provide the high amperage needed to pass through the electrodes **104** suitable to melt the metal **106** in the electric arc furnace. The power supply may also include a bus bar **120** coupled to and between the step-down transformer and the power circuitry, and configured to distribute the three-phase voltage to the power circuitry.

Although not separately shown, in some examples, the electric arc furnace system **100** includes a positioning system to controllably raise and lower the electrodes **104.** In this regard, the positioning system may include or otherwise use a rack and pinion drive system, electric winch hoists, hydraulic cylinders, or the like.

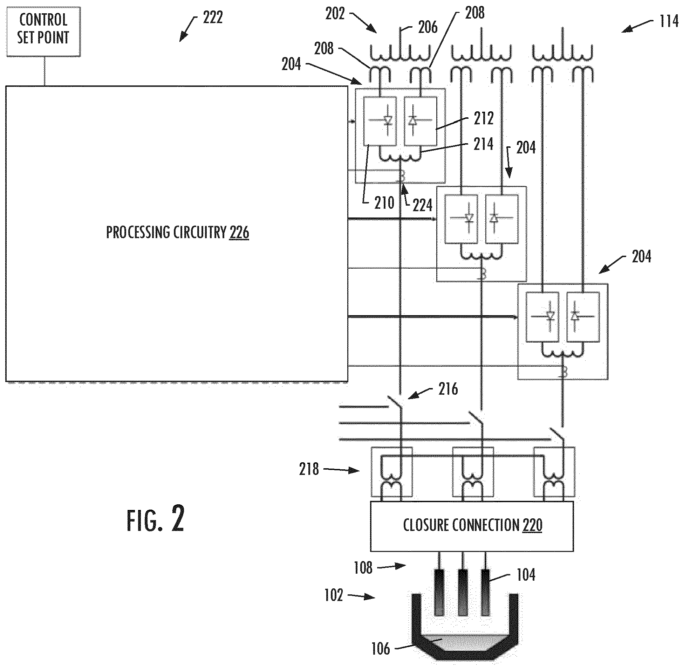

FIG. 2 further illustrates the power circuitry **114,** according to some example implementations. As shown, the power circuitry includes a multi-winding three-phase transformer **202** for each electrode **104,** and that is coupled to an input of a CCV **204** for the electrode. The multi-winding three-phase transformer includes primary windings **206** configured to receive respective phases of a multi-phase power voltage, and secondary windings **208** to deliver the multi-phase voltage to the CCV. To simplify the illustration, the figure shows one of the primary windings, and two of the secondary windings, for one phase of the multi-phase voltage.

In some examples, the CCV **204** includes a positive group converter **210,** a negative group converter **212,** and an intergroup reactor (IGR) **214** connected between the positive group converter and the negative group converter. In some examples, the positive group converter and the negative group converter include respective thyristor circuits. The positive group converter is configured to rectify a first of the three-phase power voltage to produce a first single-phase voltage. The negative group converter is configured to rectify a second of the three-phase power voltage to produce a second single-phase voltage. And the IGR is configured to produce the single-phase voltage from the first single-phase voltage and the second single-phase voltage.

In some examples, for safety reasons, the power circuitry **114** may include a bypass and safety switch **216** for each electrode **104.** In some of these examples, the bypass and safety switch is coupled to the CCV **204** for the electrode, and coupleable to the electrode. The bypass and safety switch is configured to switchably connect and disconnect the power supply **110** and the electrode, as desired.

In some examples in which the electric arc furnace system **100** includes three electrodes **104,** the power circuitry **114** includes three CCVs **204** configured to deliver lower-frequency, single-phase voltages for respective phases of three-phase voltage. In some of these examples, the power supply circuity further includes three single-phase transformers **218** coupled to the three CCVs and coupleable to the three electrodes. The three single-phase transformers are configured to receive the single-phase voltages, and deliver a second three-phase voltage to the three electrodes.

In some examples in which the electric arc furnace system **100** includes two electrodes **104,** the power circuitry **114** includes two CCVs **204** configured to deliver lower-frequency, single-phase voltages for two respective phases of the three-phase voltage. In some of these examples, the power supply circuity further includes two single-phase transformers **218** coupled to the CCVs and coupleable to the two electrodes. The two single-phase transformers are configured to receive the single-phase voltages, and deliver a two-phase voltage to the two electrodes.

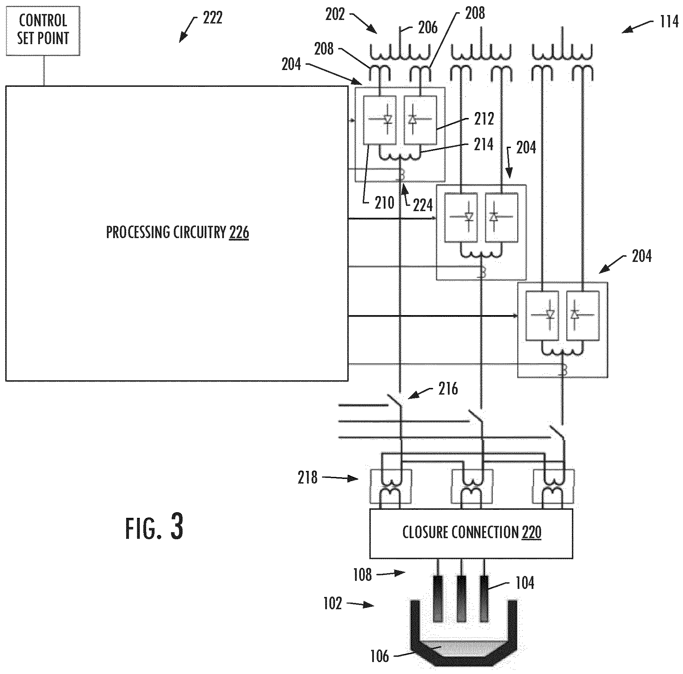

As shown in FIG. 2, the three single-phase transformers **218** have a primary-side star connection in which primary windings of the three single-phase transformers are connected in a star topology. A closure connection **220** on the secondary-side of the three single-phase transformers may be configured as a star connection or as a delta connection in which secondary windings of the three single-phase transformers are connected in respectively a star topology or a delta topology. FIG. 3 illustrates another implementation of the power circuitry **114** in which the three single-phase transformers **218** have a primary-side delta connection in which both the primary windings are connected in a delta topology, and including the closure connection that may be configured as a star connection or a delta connection.

In some example implementations of the present disclosure, then, the three single-phase transformers **218** have star-delta connection in which the primary windings are connected in a star topology, and the closure connection **220** is configured to connect the secondary windings in a delta topology. In other example implementations, the three single-phase transformers have delta-delta connection in which the primary windings are connected in a delta topology, and the closure connection is configured to connect the secondary windings in a delta topology. In other examples, the three single-phase transformers have a delta-star connection in which primary windings are connected in a delta topology, and the closure connection is configured to connect the secondary windings connected in a star topology. And in yet other examples, three single-phase transformers have a star-star connection in which the primary windings are connected in a star topology, and the closure connection is configured to connect the secondary windings in a star topology. Another example includes two single-phase transformers to have an open delta topology. Another example omits the single-phase transformers **218,** and the CCVs **204** connect more directly to the closure connection **220.**

As also shown in FIG. 2 (and also FIG. 3), in some examples, the power supply **110** further includes control circuitry **222** operably coupled to the CCV **204** for each electrode **104,** and configured to control a frequency of the single-phase voltage delivered by the CCV to the electrode. In some of these examples, the control circuitry includes one or more transducers (for each CCV) such as a voltage transducer **224** configured to measure the single-phase voltage, and/or a current transducer configured to measure current. The control circuitry also includes processing circuitry **226** coupled to the one or more transducers and the CCV. The processing circuitry is configured to at least determine a difference between a set point voltage and the single-phase voltage as measured, and adjust a thyristor firing angle in the respective thyristor circuits of the CCV to reduce the difference.

The processing circuitry **226** of example implementations of the present disclosure may be may be implemented in any of a number of different manners. The processing circuitry include one or more electronic components, which may include either or both active or passive components. In some examples, at least some of the electronic components be packaged as an integrated circuit or multiple interconnected integrated circuits (an integrated circuit at times more commonly referred to as a "chip"). In more particular examples, the processing circuitry may include a processor, coprocessor, controller, microprocessor, microcontroller, application specific integrated circuit (ASIC), field programmable gate array (FPGA) or the like.

As explained above and reiterated below, the present disclosure includes, without limitation, the following example implementations.

Clause 1. An electric arc furnace system comprising: an electric arc furnace including one or more electrodes, the electric arc furnace configured to produce heat by passage of current through the one or more electrodes that causes an electric arc between the one or more electrodes and a metal in the electric arc furnace; and a power supply coupled to the electric arc furnace, and coupleable to a utility configured to provide three-phase alternating current (AC) power, the power supply including power circuitry with a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal.

Clause 2. The electric arc furnace system of clause 1, wherein the power supply further includes a step-down transformer coupleable to the utility, and coupled to the power circuitry, the step-down transformer configured to step down three-phase voltage of the three-phase AC power.

Clause 3. The electric arc furnace system of clause 2, wherein the power supply further comprises a bus bar coupled to and between the step-down transformer and the power circuitry, the bus bar configured to distribute the three-phase voltage to the power circuitry.

Clause 4. The electric arc furnace system of any of clauses 1 to 3, wherein the power circuitry further includes a multi-winding three-phase transformer for each electrode, the multi-winding three-phase transformer coupled to an input of the CCV for the electrode, the multi-winding three-phase transformer including primary windings configured to receive respective phases of a three-phase power voltage, and secondary windings to deliver the three-phase power voltage to the CCV.

Clause 5. The electric arc furnace system of any of clauses 1 to 4, wherein the CCV includes: a positive group converter configured to rectify a first of the three-phase power voltage to produce a first single-phase voltage; a negative group converter configured to rectify a second of the three-phase power voltage to produce a second single-phase voltage; and an intergroup reactor (IGR) connected between the positive group converter and the negative group converter, the IGR configured to produce the single-phase voltage from the first single-phase voltage and the second single-phase voltage.

Clause 6. The electric arc furnace system of clause 5, wherein the positive group converter and the negative group converter include respective thyristor circuits.

Clause 7. The electric arc furnace system of any of clauses 1 to 6, wherein the power circuitry further includes a bypass and safety switch for each electrode, the bypass and safety switch coupled to the CCV for the electrode, and coupleable to the electrode, the bypass and safety switch configured to switchably connect and disconnect the power supply and the electrode.

Clause 8. The electric arc furnace system of any of clauses 1 to 7, wherein the one or more electrodes includes three electrodes, the power circuitry includes three CCVs configured to deliver single-phase voltages for respective phases of three-phase voltage, and wherein the power supply circuity further includes three single-phase transformers coupled to the three CCVs and coupleable to the three electrodes, the three single-phase transformers configured to receive the single-phase voltages, and deliver a second three-phase voltage to the three electrodes.

Clause 9. The electric arc furnace system of clause 8, wherein the three single-phase transformers have a star-delta connection in which primary windings of the three single-phase transformers are connected in a star topology, and secondary windings of the three single-phase transformers are connected in a delta topology.

Clause 10. The electric arc furnace system of clause 8, wherein the three single-phase transformers have a delta-delta connection in which both primary windings and secondary windings of the three single-phase transformers are connected in a delta topology.

Clause 11. The electric arc furnace system of any of clauses 1 to 7, wherein the one or more electrodes includes two electrodes, the power circuitry includes two CCVs configured to deliver single-phase voltages for two respective phases of three-phase voltage, and wherein the power supply circuity further includes two single-phase transformers coupled to the two CCVs and coupleable to the two electrodes, the two single-phase transformers configured to receive the single-phase voltages, and deliver a two-phase voltage to the two electrodes.

Clause 12. The electric arc furnace system of any of clauses 1 to 11, wherein the power supply further includes control circuitry operably coupled to the CCV for each electrode, and configured to control a frequency of the single-phase voltage delivered by the CCV to the electrode.

Clause 13. The electric arc furnace system of clause 12, wherein the control circuitry includes: a transducer configured to measure the single-phase voltage; and processing circuitry coupled to the transducer and the CCV, the processing circuitry configured to at least: determine a difference between a set point voltage and the single-phase voltage as measured; and control the frequency of the single-phase voltage to reduce the difference.

Clause 14. The electric arc furnace system of clause 13, wherein the processing circuitry configured to determine the difference between the set point voltage and the single-phase voltage includes the processing circuitry configured to: determine a root mean square (RMS) of the single-phase voltage as measured; and determine the difference between the set point voltage and the RMS.

Clause 15. A power supply for an electric arc furnace in which heat is generated by passage of current through one or more electrodes that causes an electric arc between the one or more electrodes and a metal in the electric arc furnace, the power supply coupleable to and between the electric arc furnace and a utility configured to provide three-phase alternating current (AC) power, the power supply comprising: power circuitry including a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal; and control circuitry operably coupled to the CCV for each electrode, and configured to control a frequency of the single-phase voltage delivered by the CCV to the electrode.

Clause 16. The power supply of clause 15, wherein the power supply further comprises a step-down transformer coupleable to the utility, and coupled to the power circuitry, the step-down transformer configured to step down three-phase voltage of the three-phase AC power.

Clause 17. The power supply of clause 16, wherein the power supply further comprises a bus bar coupled to and between the step-down transformer and the power circuitry, the bus bar configured to distribute the three-phase voltage to the power circuitry.

Clause 18. The power supply of any of clauses 15 to 17, wherein the power circuitry further includes a multi-winding three-phase transformer for each electrode, the multi-winding three-phase transformer coupled to an input of the CCV for the electrode, the multi-winding three-phase transformer including primary windings configured to receive respective phases of a three-phase power voltage, and secondary windings to deliver the three-phase power voltage to the CCV

Clause 19. The power supply of any of clauses 15 to 18, wherein the CCV includes: a positive group converter configured to rectify a first of the three-phase power voltage to produce a first single-phase voltage; a negative group converter configured to rectify a second of the three-phase power voltage to produce a second single-phase voltage; and an intergroup reactor (IGR) connected between the positive group converter and the negative group converter, the IGR configured to produce the single-phase voltage from the first single-phase voltage and the second single-phase voltage.

Clause 20. The power supply of clause 19, wherein the positive group converter and the negative group converter include respective thyristor circuits.

Clause 21. The power supply of any of clauses 15 to 20, wherein the power circuitry further includes a bypass and safety switch for each electrode, the bypass and safety switch coupled to the CCV for the electrode, and coupleable to the electrode, the bypass and safety switch configured to switchably connect and disconnect the power supply and the electrode.

Clause 22. The power supply of any of clauses 15 to 21, wherein the one or more electrodes includes three electrodes, the power circuitry includes three CCVs configured to deliver single-phase voltages for respective phases of three-phase voltage, and wherein the power supply circuity further includes three single-phase transformers coupled to the three CCVs and coupleable to the three electrodes, the three single-phase transformers configured to receive the single-phase voltages, and deliver a second three-phase voltage to the three electrodes.

Clause 23. The power supply of clause 22, wherein the three single-phase transformers have a star-delta connection in which primary windings of the three single-phase transformers are connected in a star topology, and secondary windings of the three single-phase transformers are connected in a delta topology.

Clause 24. The power supply of clause 22, wherein the three single-phase transformers have a delta-delta connection in which both primary windings and secondary windings of the three single-phase transformers are connected in a delta topology.

Clause 25. The power supply of any of clauses 15 to 21, wherein the one or more electrodes includes two electrodes, the power circuitry includes two CCVs configured to deliver single-phase voltages for two respective phases of three-phase voltage, and wherein the power supply circuity further includes two single-phase transformers coupled to the two CCVs and coupleable to the two electrodes, the two single-phase transformers configured to receive the single-phase voltages, and deliver a two-phase voltage to the two electrodes.

Clause 26. The power supply of any of clauses 15 to 25, wherein the control circuitry includes: a voltage transducer and current transducer configured to measure the single-phase voltage and current; and processing circuitry coupled to the voltage transducer and current transducer, and the CCV, the processing circuitry configured to at least: determine a difference between a set point voltage and the single-phase voltage as measured; and control the frequency of the single-phase voltage to reduce the difference.

Clause 27. The power supply of clause 26, wherein the processing circuitry configured to determine the difference between the set point voltage and the single-phase voltage includes the processing circuitry configured to: determine a root mean square (RMS) of the single-phase voltage as measured; and determine the difference between the set point voltage and the RMS.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An electric arc furnace system comprising:
an electric arc furnace including one or more electrodes, the electric arc furnace configured to produce heat by passage of current through the one or more electrodes that causes an electric arc between the one or more electrodes and a metal in the electric arc furnace; and
a power supply coupled to the electric arc furnace, and coupleable to a utility configured to provide three-phase alternating current (AC) power, the power supply including power circuitry with a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal.

2. The electric arc furnace system of claim 1, wherein the power circuitry further includes a multi-winding three-phase transformer for each electrode, the multi-winding three-phase transformer coupled to an input of the CCV for the electrode, the multi-winding three-phase transformer including primary windings configured to receive respective phases of a three-phase power voltage, and secondary windings to deliver the three-phase power voltage to the CCV.

3. The electric arc furnace system of claim 1 or 2, wherein the CCV includes:
a positive group converter configured to rectify a first of the three-phase power voltage to produce a first single-phase voltage;
a negative group converter configured to rectify a second of the three-phase power voltage to produce a second single-phase voltage; and
an intergroup reactor (IGR) connected between the positive group converter and the negative group converter, the IGR configured to produce the single-phase voltage from the first single-phase voltage and the second single-phase voltage.

4. The electric arc furnace system of claim 1, 2 or 3, wherein the one or more electrodes includes three electrodes, the power circuitry includes three CCVs configured to deliver single-phase voltages for respective phases of three-phase voltage, and
wherein the power supply circuity further includes three single-phase transformers coupled to the three CCVs and coupleable to the three electrodes, the three single-phase transformers configured to receive the single-phase voltages, and deliver a second three-phase voltage to the three electrodes.

5. The electric arc furnace system of claim 4, wherein the three single-phase transformers have a star-delta connection in which primary windings of the three single-phase transformers are connected in a star topology, and secondary windings of the three single-phase transformers are connected in a delta topology, or,
wherein the three single-phase transformers have a delta-delta connection in which both primary windings and secondary windings of the three single-phase transformers are connected in a delta topology.

6. The electric arc furnace system of any preceding claim, wherein the power supply further includes control circuitry operably coupled to the CCV for each electrode, and configured to control a frequency of the single-phase voltage delivered by the CCV to the electrode, optionally wherein the control circuitry includes:
a transducer configured to measure the single-phase voltage; and
processing circuitry coupled to the transducer and the CCV, the processing circuitry configured to at least:
determine a difference between a set point voltage and the single-phase voltage as measured; and
control the frequency of the single-phase voltage to reduce the difference.

7. The electric arc furnace system of claim 6, wherein the processing circuitry configured to determine the difference between the set point voltage and the single-phase voltage includes the processing circuitry configured to:
determine a root mean square (RMS) of the single-phase voltage as measured; and
determine the difference between the set point voltage and the RMS.

8. A power supply for an electric arc furnace in which heat is generated by passage of current through one or more electrodes that causes an electric arc between the one or more electrodes and a metal in the electric arc furnace, the power supply coupleable to and between the electric arc furnace and a utility configured to provide three-phase alternating current (AC) power, the power supply comprising:
power circuitry including a cycloconverter (CCV) for each electrode of the one or more electrodes, the CCV configured to receive three-phase power voltage and produce a single-phase voltage with reduced frequency that is delivered to the electrode to cause the electrode to create the electric arc that produces the heat to melt the metal; and
control circuitry operably coupled to the CCV for each electrode, and configured to control a frequency of the single-phase voltage delivered by the CCV to the electrode.

9. The power supply of claim 8, wherein the power supply further comprises a step-down transformer coupleable to the utility, and coupled to the power circuitry, the step-down transformer configured to step down three-phase voltage of the three-phase AC power, optionally wherein the power supply further comprises a bus bar coupled to and between the step-down transformer and the power circuitry, the bus bar configured to distribute the three-phase voltage to the power circuitry.

10. The power supply of claim 8 or 9, wherein the power circuitry further includes a multi-winding three-phase transformer for each electrode, the multi-winding three-phase transformer coupled to an input of the CCV for the electrode, the multi-winding three-phase transformer including primary windings configured to receive respective phases of a three-phase power voltage, and secondary windings to deliver the three-phase power voltage to the CCV.

11. The power supply of claim 8, 9 or 10, wherein the CCV includes:
a positive group converter configured to rectify a first of the three-phase power voltage to produce a first single-phase voltage;
a negative group converter configured to rectify a second of the three-phase power voltage to produce a second single-phase voltage; and
an intergroup reactor (IGR) connected between the positive group converter and the negative group converter, the IGR configured to produce the single-phase voltage from the first single-phase voltage and the second single-phase voltage.

12. The power supply of any one of claims 8 to 11, wherein the power circuitry further includes a bypass and safety switch for each electrode, the bypass and safety switch coupled to the CCV for the electrode, and coupleable to the electrode, the bypass and safety switch configured to switchably connect and disconnect the power supply and the electrode.

13. The power supply of any one of claims 8 to 12, wherein the one or more electrodes includes three electrodes, the power circuitry includes three CCVs configured to deliver single-phase voltages for respective phases of three-phase voltage, and
wherein the power supply circuity further includes three single-phase transformers coupled to the three CCVs and coupleable to the three electrodes, the three single-phase transformers configured to receive the single-phase voltages, and deliver a second three-phase voltage to the three electrodes, optionally,
wherein the three single-phase transformers have a star-delta connection in which primary windings of the three single-phase transformers are connected in a star topology, and secondary windings of the three single-phase transformers are connected in a delta topology, or,
wherein the three single-phase transformers have a delta-delta connection in which both primary windings and secondary windings of the three single-phase transformers are connected in a delta topology.

14. The power supply of any one of claims 8 to 13, wherein the control circuitry includes:
a voltage transducer and a current transducer configured to measure the single-phase voltage and current; and
processing circuitry coupled to the voltage transducer and current transducer, and the CCV, the processing circuitry configured to at least:
determine a difference between a set point voltage and the single-phase voltage as measured; and
control the frequency of the single-phase voltage to reduce the difference.

15. The power supply of claim 14, wherein the processing circuitry configured to determine the difference between the set point voltage and the single-phase voltage includes the processing circuitry configured to:
determine a root mean square (RMS) of the single-phase voltage as measured; and
determine the difference between the set point voltage and the RMS.
